(19) Europäisches Patentamt

European Patent Office

Office européen des brevets

(11) **EP 4 214 561 B1**

(12) **EUROPEAN PATENT SPECIFICATION**

(45) Date of publication and mention
of the grant of the patent:
**29.07.2026 Bulletin 2026/31**

(21) Application number: **20796483.4**

(22) Date of filing: **07.10.2020**

(51) International Patent Classification (IPC):
***G02B 7/08*** *(2021.01)* ***G02B 13/00*** *(2006.01)*
***G02B 17/08*** *(2006.01)* ***G02B 17/00*** *(2006.01)*

(52) Cooperative Patent Classification (CPC):
**G02B 13/007; G02B 17/004; G02B 17/0832;
G02B 17/0856;** G02B 7/08

(86) International application number:
**PCT/EP2020/078046**

(87) International publication number:
**WO 2022/073592 (14.04.2022 Gazette 2022/15)**

(54) **COMPACT CATADIOPTRIC IMAGING APPARATUS**

KOMPAKTE KATADIOPTRISCHE ABBILDUNGSVORRICHTUNG

APPAREIL D'IMAGERIE CATADIOPTRIQUE COMPACT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.07.2023 Bulletin 2023/30**

(73) Proprietor: **Huawei Technologies Co., Ltd.
Shenzhen, Guangdong 518129 (CN)**

(72) Inventors:
• **MANSSEN, Daniel
80992 Munich (DE)**
• **BRUECKNER, Andreas
80992 Munich (DE)**

• **HERKOMMER, Alois
70174 Stuttgart (DE)**
• **THIELE, Simon
70174 Stuttgart (DE)**
• **HEGELS, Ernst
80992 Munich (DE)**

(74) Representative: **Gill Jennings & Every LLP
The Broadgate Tower
20 Primrose Street
London EC2A 2ES (GB)**

(56) References cited:
**DE-A1- 102018 207 338 JP-A- 2005 333 617
US-A- 3 494 688 US-A- 6 147 808
US-A1- 2018 024 336**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure relates to optical imaging apparatuses in general. More specifically, the disclosure relates to a compact catadioptric imaging apparatus for instance, for a camera of an electronic portable device, such as a smartphone, tablet computer and the like.

BACKGROUND

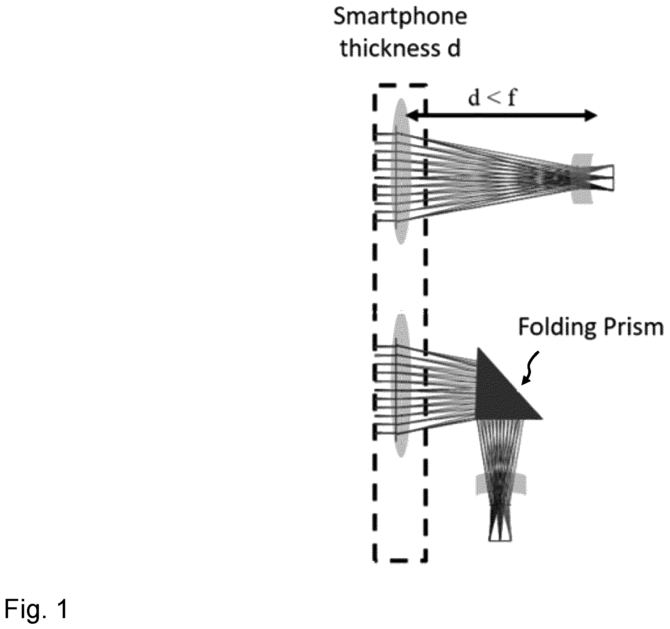

While the optical performance of cameras of modern mobile phones is steadily increasing, the available space within mobile phones for housing such cameras remains virtually constant. Thus, it is a challenging problem to provide a high-performance imaging system within the space constraints of the housing of a mobile phone. For a given image sensor size, the maximum achievable telephoto magnification is given by the effective focal length of the imaging system. For large magnifications with a full field-of-view (FOV) of less than, for instance, 6 deg the required effective focal length is several times larger than the maximum acceptable thickness of a smartphone. Consequently, an upright standing telephoto imaging system with large magnifications cannot be accommodated within the housing of a smartphone, as illustrated in figure 1.

Moreover, to achieve a high image quality, the pixel size of the image sensor should be small and thus the f-number (f#) of the telephoto system should be smaller than about 5. For instance, for a system with a f-number of 4.1 and an effective focal length (EFL) of 50 mm the entrance pupil diameter (D) is about 12 mm. Consequently, also single times folded telephoto architectures (e.g. using a 90 deg folding prism) cannot be accommodated within the housing of a smartphone, as illustrated in figure 1.

Prior art document JP 2005 333617 A discloses an imaging device comprising a light guide path, an incidence mirror, and an imaging element, wherein light from an object enters the light guide path, is reflected by mirror surfaces arranged in the light guide, and is guided along a folded optical path toward the imaging element to form an image.

SUMMARY

It is an object to provide an optical imaging apparatus enabling high optical magnifications for FOV angles of less than about 6 deg, which can be accommodated in a compact housing, e.g. in a mobile phone or tablet computer.

The foregoing and other objects are achieved by the subject matter of claim 1.

Further implementation forms are apparent from the dependent claims, the description and the figures.

According to a first aspect, an imaging apparatus for generating an optical image at an image surface as set out in appended claim 1 is provided. The imaging apparatus comprises a catadioptric device and a lens assembly arranged behind the catadioptric device, "behind" relating to an optical path of the imaging apparatus. In other words, the lens assembly is placed behind the catadioptric device in the sense that the lens assembly receives light that has passed through the catadioptric device. In this disclosure, a second optical element (e.g. the lens assembly) is said to be arranged behind a first optical element (e.g. the catadioptric device) if the first optical element is arranged to transmit or reflect light toward the second optical element. The lens assembly comprises one or more lenses.

The catadioptric device includes a monolithic piece of material with at least a planar first face and a non-planar second face. The material may comprise glass or a transparent plastic material. The first face provides a refractive entrance surface configured to transmit light toward a reflective inner surface of the second face. The reflective inner surface of the second face is configured to internally reflect light received from the refractive entrance surface of the first face toward a reflective inner surface of the first face. The refractive entrance surface and the reflective inner surface of the first face overlap partially. Internal reflection may be achieved by total internal reflection (i.e. by a large angle of incidence, which is the angle between a light ray and a surface normal) or by coating the outer surface with a reflective material, e.g. a metal or a dielectric thin-film coating.

The reflective inner surface of the first face of the piece of material is configured to reflect light received from the reflective inner surface of the second face toward a further reflective surface of the catadioptric device by total internal reflection.

Advantageously, the folded catadioptric layout of the imaging apparatus allows reducing the spatial dimensions of the imaging apparatus with a small field of view (such as smaller than about 5.1 °), while maintaining an excellent f-number and, thus, good image quality.

In the first aspect, the further reflective surface is a first one among a plurality of further reflective surfaces of the catadioptric device.

In the first aspect, the further reflective surface is configured to reflect light received from the reflective inner surface of the first face toward a further reflective inner surface of the first face.

In a further possible implementation form of the first aspect, the plurality of further reflective surfaces of the catadioptric device are provided by the piece of material.

In a further possible implementation form of the first aspect, the catadioptric device further comprises one or more mirrors, wherein the one or more mirrors are configured to provide one or more of the further reflective surfaces of the catadioptric device.

In a further possible implementation form of the first aspect, the lens assembly is configured to focus the light received from the catadioptric device at the image surface.

In a further possible implementation form of the first aspect, at least one lens of the lens assembly is movable along an optical axis of the lens assembly, for adjusting a focus of the imaging apparatus.

In a further possible implementation form of the first aspect, the at least one lens of the lens assembly has a spherical shape or an aspherical or a freeform shape.

In a further possible implementation form of the first aspect, the reflective inner surface of the second face is curved or is a freeform surface.

In a further possible implementation form of the first aspect, the reflective inner surface of the second face is an off axis segment of a conic surface with a conic constant between 0.3 and 1.0 and a surface vertex position that is closer to the image surface than the refractive entrance surface of the first face.

In a further possible implementation form of the first aspect, the reflective inner surface of the second face is an off-axis segment of an aspheric surface or an off-axis segment of an x,y-polynomial freeform surface.

In a further possible implementation form of the first aspect, a maximum distance d between the refractive entrance surface of the first face and the reflective inner surface of the second face is smaller than a fifth of an effective focal length, EFL, of the imaging apparatus.

In a further possible implementation form of the first aspect, a full field-of-view (FOV) of the imaging apparatus is smaller than 21°.

In a further possible implementation form of the first aspect, the imaging apparatus further comprises a near-infrared cut-off filter and/or a cover glass, the near-infrared cut-off filter and/or the cover glass being placed between the lens assembly and the image surface.

In a further possible implementation form of the first aspect, a stop of the imaging apparatus is located in front of the refractive entrance surface of the first face.

In a further possible implementation form of the first aspect, the piece of material has one or more further faces, the one or more further faces comprising an absorbing material or baffles for suppressing straylight.

In a further possible implementation form of the first aspect, at least one of the reflective inner surface of the second face, the reflective inner surface of the first face, and the further reflective surface comprises a reflective coating layer.

In a further possible implementation form of the first aspect, at least one of the reflective inner surface of the second face, the reflective inner surface of the first face, and the further reflective surface comprises a colour correction layer. For instance, on each reflective surface of the catadioptric device an additional polymer layer may be provided with a different refractive index and/or Abbe number for colour correction. In a further possible implementation form of the first aspect, the imaging apparatus further comprises an image sensor arranged to sense the optical image on the image surface.

According to a second aspect a portable device is provided comprising the imaging apparatus according to the first aspect.

In a further possible implementation form of the second aspect, the portable device is a mobile phone or a tablet computer.

Details of one or more embodiments are set forth in the accompanying drawings and the description below. Other features, objects, and advantages will be apparent from the description, drawings, and claims.

BRIEF DESCRIPTION OF THE DRAWINGS

In the following embodiments of the invention are described in more detail with reference to the attached figures and drawings, in which:

Fig. 1 is a diagram illustrating the space constraints of a mobile phone for an optical imaging apparatus;

Fig. 2 is a schematic diagram illustrating an optical imaging apparatus according to an embodiment;

Fig. 3 shows several perspective views of an optical imaging apparatus according to an embodiment;

Fig. 4 is a table listing exemplary surface parameters of an optical imaging apparatus according to an embodiment;

Fig. 5 is a table listing exemplary asphere coefficients of a lens assembly of an optical imaging apparatus according to an embodiment;

Fig. 6 is a table listing exemplary XY polynomial coefficients of surfaces of an optical imaging apparatus according to an embodiment;

Fig. 7 shows the modulation transfer function map as a function of object angular space for a 0° azimuth angle of an optical imaging apparatus according to an embodiment;

Fig. 8 shows the modulation transfer function map as a function of object angular space for a 90° azimuth angle of an optical imaging apparatus according to an embodiment; and

Fig. 9 shows the grid distortion of an optical imaging apparatus according to an embodiment.

In the following identical reference signs refer to identical or at least functionally equivalent features.

DETAILED DESCRIPTION OF THE EMBODIMENTS

In the following description, reference is made to the accompanying figures, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

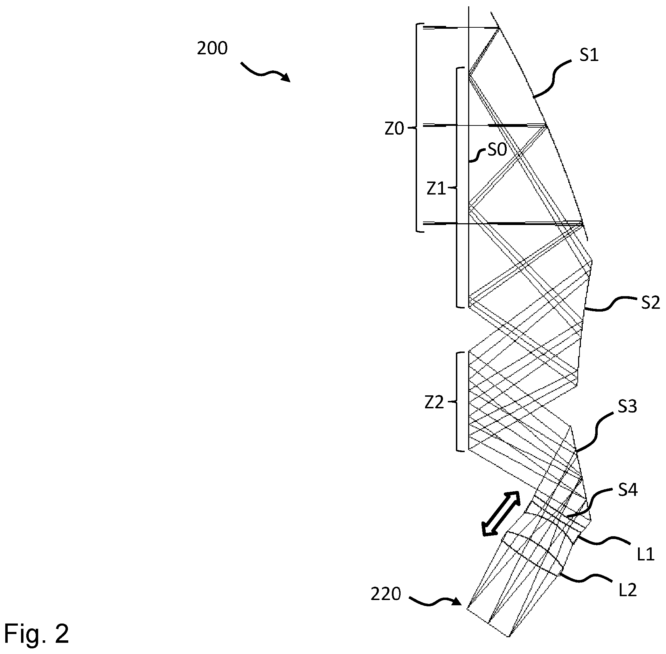

Figure 2 is a diagram illustrating an optical imaging apparatus 200 according to an embodiment. In an embodiment, the imaging apparatus 200 is provided in the form of a camera for a portable electronic device, such as a mobile phone, i.e. smartphone, a tablet computer or the like.

The imaging apparatus 200 is configured to generate an optical image at an image surface of the imaging apparatus 200. In the embodiment illustrated in figure 2, the imaging apparatus 200 comprises an image sensor 220 placed at the image surface of the imaging apparatus 200. The imaging apparatus 200 comprises a catadioptric device and a lens assembly arranged behind the catadioptric device, i.e. in the direction of light propagation behind the catadioptric device. In the embodiment shown in figure 2 the lens assembly comprises a first lens L1 and a second lens L2. In a further embodiment, the lens assembly may comprise more or less than the two lenses L1, L2 shown in figure 2, for instance, three or four lenses or a single lens.

In an embodiment, the imaging apparatus 200 may further comprise a near-infrared cut-off filter and/or a cover glass arranged between the lens assembly L1, L2 and the image sensor 220. In an embodiment, the stop of the imaging apparatus 200 is located in front of the refractive entrance surface Z0 of the first face S0.

In an embodiment, the lenses L1, L2 of the lens assembly are configured to focus the light received from the catadioptric device at the image surface, i.e. the image sensor 220 in a distance range from infinity to near distance (such as 1m). To this end, in an embodiment, at least one of the lenses L1, L2 of the lens assembly is configured to be moved back and forth along its optical axis, as illustrated in figure 2. In an embodiment, the lenses L1, L2 may be configured to be moved separately or as a group of lenses. In an embodiment, one or more of the lenses L1, L2 of the lens assembly may have a spherical or an aspheric or freeform surface shape. Some exemplary surface shapes of the lenses L1 and L2 will be described in more detail below.

As will be described in more detail below, the catadioptric device of the imaging apparatus 200 comprises a monolithic piece or block of material 210. The material is optically transparent so that light can propagate inside the material. The material may be isotropic. The material may comprise glass or a transparent plastic material, for example.

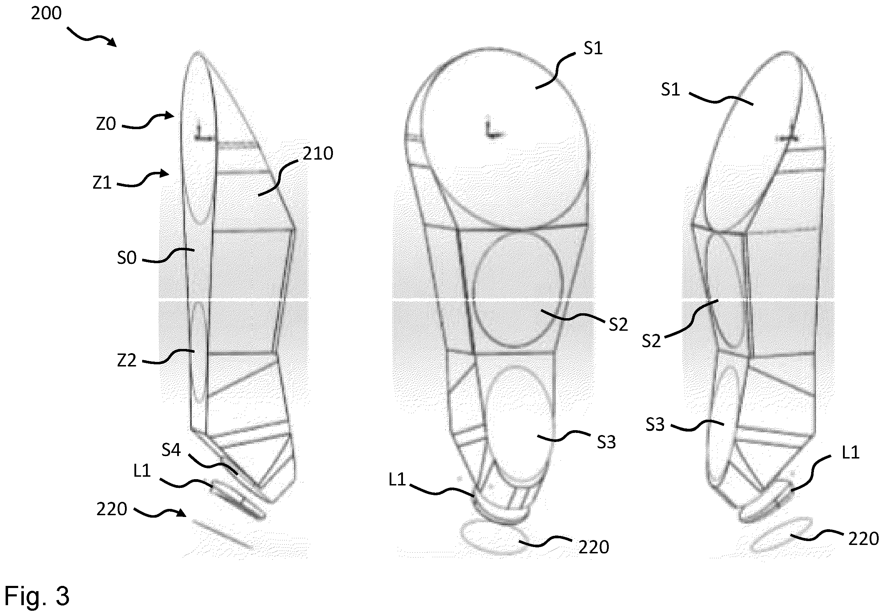

Figure 3 shows several perspective views of the monolithic piece or block of material 210 of the catadioptric device of an optical imaging apparatus according to an embodiment. As can be taken from figure 3, the piece of material 210 has a plurality of faces, including a planar first face S0 and a non-planar second face. As illustrated in figure 2, a region or zone of the first face S0 of the piece of material 210 provides a refractive entrance surface Z0 configured to transmit light toward a reflective inner surface S1 provided by the non-planar second face of the piece of material 210. The reflective inner surface S1 of the second face, in turn, is configured to internally reflect light received from the refractive entrance surface Z0 of the first face S0 toward a further region or zone of the first face S0 providing a reflective inner surface Z1 of the first face S0. In an embodiment, internal reflection may be achieved by total internal reflection (i.e. by a large angle of incidence, which is the angle between a light ray and the surface normal) or by coating the respective surface with a reflective material, e.g. a metal or a dielectric thin-film coating.

As can be taken from figure 2, the refractive entrance surface Z0 and the reflective inner surface Z1 of the first face S0 overlap partially. As will be appreciated, this partial overlap is due the inclination of the reflective inner surface S1 with respect to the planar first face S0 of the piece of material 210. The reflective inner surface Z1 of the first face S0 of the piece of material 210 is configured to reflect light received from the reflective inner surface S1 of the second face toward a further reflective surface S2 of the catadioptric device by total internal reflection. Thus, as will be appreciated, the first face S0 of the piece of material 210 is used both for transmission and total reflection.

In the embodiment shown in figure 3, the further reflective surface S2 is provided by the piece of material 210. In the embodiments shown in figures 2 and 3, the further reflective surface S2 is a first one among a plurality of further reflective surfaces of the catadioptric device, namely the further reflective surfaces Z2 and S3. As can be taken from the embodiment shown in figure 2, the further reflective surface S2 is configured to reflect light from the reflective inner surface Z1 of the first face S0 toward the further reflective inner surface Z2 provided by a zone of the first face S0. As illustrated in figure 2, in an embodiment, there may be no overlap between the further reflective inner surface Z2 of the first face S0 and the reflective inner surface Z1 of the first face S0. In turn, the further reflective inner surface Z2 provided by the first face S0 is configured to reflect light from the further reflective surface S2 toward the further reflective surface S3. As illustrated in figure 2, the further reflective surface S3 is configured to reflect the light received from the reflective inner surface Z2 of the first face S0 toward a further refractive surface S4 of the catadioptric device of the imaging apparatus 200 for transmitting the light received from the further reflective surface S3 toward the lenses L1 and L2 of the lens assembly. In an embodiment, the further refractive surface S4 may be provided by a further face of the piece of material 210, as illustrated in figure 3.

As will be appreciated, in the embodiments shown in figures 2 and 3, the light path through the imaging apparatus 200 is folded five times in a direction substantially perpendicular to the direction of the light entering through the refractive entrance surface Z0 of the first face S0 of the imaging apparatus 200. Advantageously, this allows accommodating the imaging apparatus 200 within the tight spatial constraints of a mobile phone housing. In further embodiment, the imaging apparatus 200 may be configured to fold the light path, i.e. the optical axis more than 5 times.

In an embodiment, at least one of the reflective inner surface S1 of the second face, the reflective inner surface Z1 of the first face S0, and the further reflective surface S2 may comprise a reflective coating layer and/or colour correction layer. For instance, on each reflective surface of the catadioptric device an additional polymer layer may be provided with a different refractive index and/or Abbe number for colour correction.

In the embodiment of figure 3, the plurality of further reflective surfaces S2, Z2, S3, and the further surface S4 are provided by the piece of material 210. In a further embodiment, the further reflective surfaces S2, Z2, S3 and the further surface S4 may be provided by optical elements other than the piece of material 210. For instance, in an embodiment, the catadioptric device may further comprise one or more mirrors configured to provide the plurality of further reflective surfaces S2, Z2, S3 of the catadioptric device.

As already mentioned above and shown in the embodiment of figure 3, in addition to the faces S0, S1, S2, S3, and S4 the piece of material 210 may comprise one or more further faces. For suppressing straylight one or more of these further faces of the piece of material 210 may comprise an absorbing material or baffles arranged thereon.

In an embodiment, the reflective inner surface S1 of the second face of the piece of material 210 is curved or a freeform surface. In the following several exemplary shapes of the reflective inner surface S1 of the second face of the piece of material 210 will be described in more detail.

In an embodiment, the reflective inner surface S1 of the second face of the piece of material 210 is an off-axis segment of an anamorphic conic surface with conic constant k between 0.3 and 1.0 and a surface vertex position that is closer to the image surface, i.e. the image sensor 220 than the refractive entrance surface Z0 of the first face S0..

In a further embodiment, the reflective inner surface S1 of the second face of the piece of material is an off-axis segment of an aspheric surface or an off-axis segment of an x,y-polynomial freeform surface.

In an embodiment, the maximum distance d between the refractive entrance surface Z0 of the first face S0 and the reflective inner surface S1 of the second face of the piece of material 210 is smaller than a fifth of an effective focal length, EFL, of the imaging apparatus 200. In an embodiment, the full field-of-view of the imaging apparatus 200 is smaller than 21°.

By way of example, the imaging apparatus 200 shown in figure 2 may provide a magnification of M20x (with a FOV of 5.2°) suitable to be implemented into a modern smartphone. By way of example, the total system length may be 38.3 mm, while the total thickness, i.e. depth is smaller than 7.6 mm. The imaging apparatus 200 shown in figure 2 may achieve a f-number of 4.0.

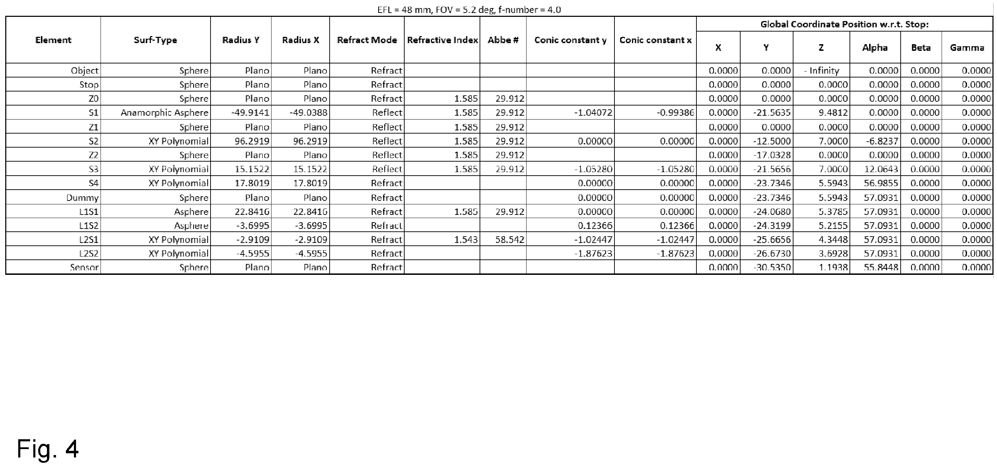

Figure 4 shows a table listing exemplary surface parameters of the embodiment of the optical imaging apparatus 200 shown in figures 2 and 3, including the surface type, the radius in x and y direction, the refraction mode, the refractive index, the Abbe number, the conic constant in x and y direction, as well as parameters describing the global coordinate positions with respect to the centre of the stop of the imaging apparatus 200.

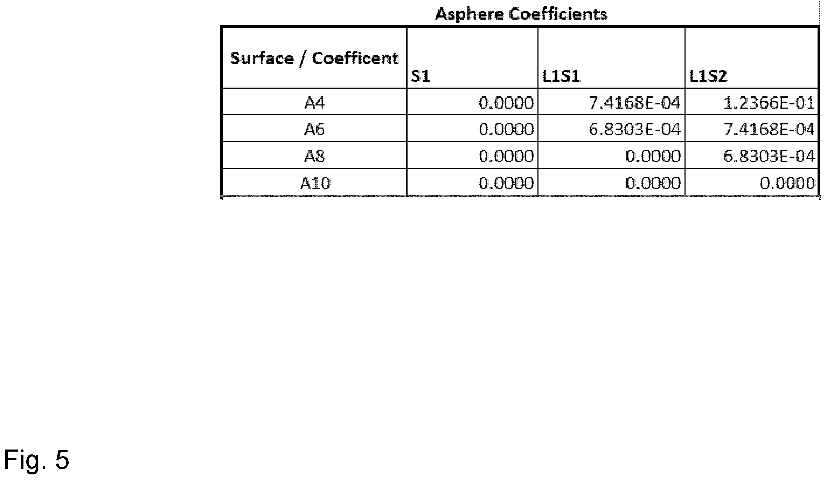

Figure 5 shows a table listing exemplary asphere coefficients of a first surface L1S1 and a second surface L1S2 of the first lens L1 of the lens assembly of the embodiment of the optical imaging apparatus 200 shown in figures 2 and 3.

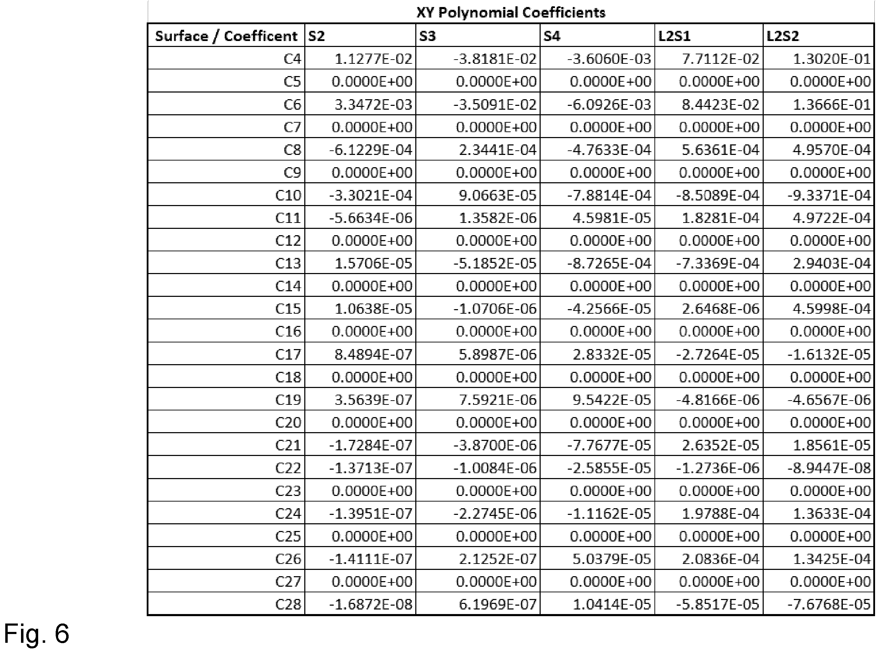

Figure 6 shows a table listing exemplary XY polynomial coefficients C4-C28 of the surfaces S2, S3, S4 of the embodiment of the optical imaging apparatus 200 shown in figures 2 and 3.

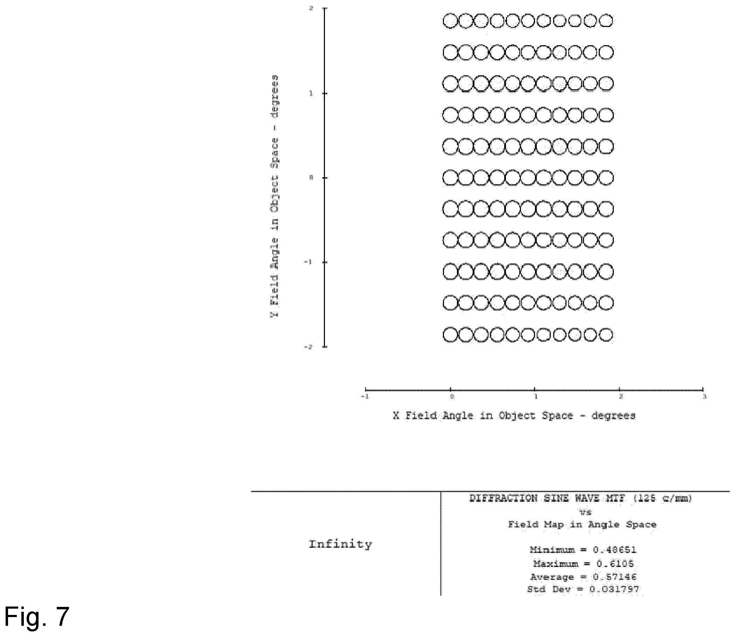

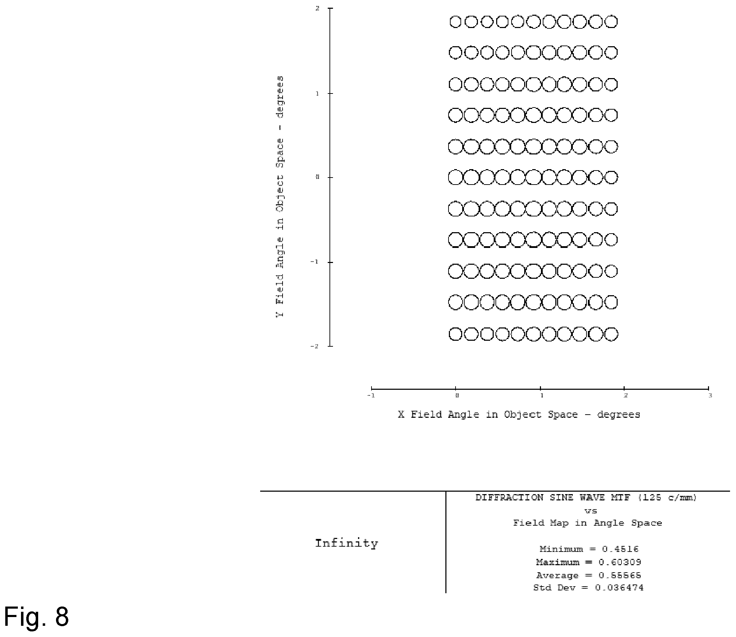

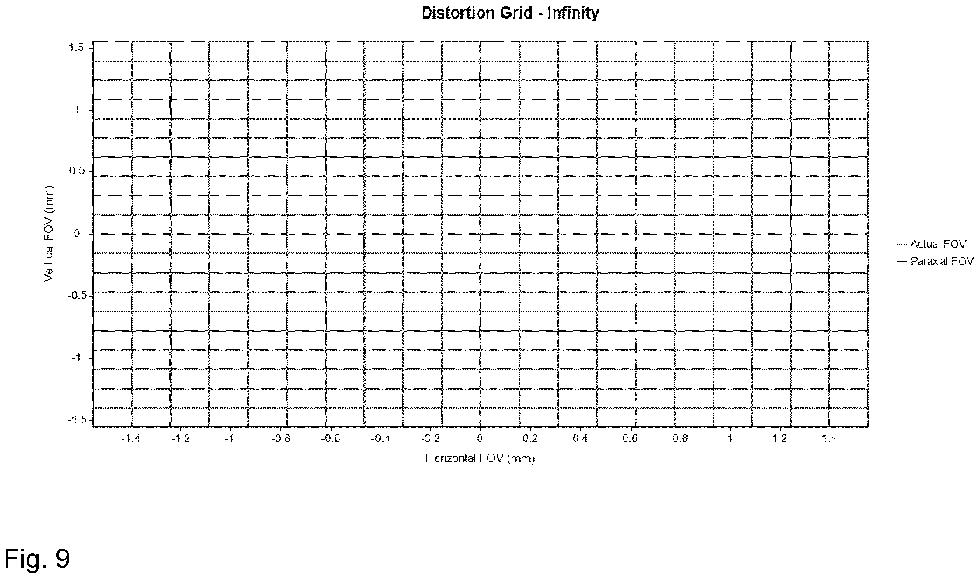

Figures 7, 8 and 9 illustrate the performance of the embodiment of the optical imaging apparatus 200 shown in figures 2 and 3. More specifically, figure 7 shows the modulation transfer function map as a function of object angular space for a 0° azimuth angle of the embodiment of the optical imaging apparatus 200 shown in figures 2 and 3, while figure 8 shows the modulation transfer function map as a function of object angular space for a 90° azimuth angle thereof. Figure 9 shows the grid distortion of the embodiment of the optical imaging apparatus 200 shown in figures 2 and 3.

The sag profiles of the surfaces of the embodiment of the optical imaging apparatus 200 shown in figures 2 and 3 and which are specified in figures 4, 5 and 6 may be described by one or more of the following equations:

The x-y polynomial surfaces S2, S3, S4 as well as the front and rear surface of lens L2 may be described by a series of polynomials (up to the $10^{th}$ order) added to a base conic. The polynomial is expanded into monomials of $x^m y^n$ where $(m + n) \leq 10$. The equation used is:

$$z = \frac{c \cdot r^2}{1 + \sqrt{1 - (1+k)c^2 \cdot r^2}} + \sum_{j=2}^{66} C_j \cdot x^m y^n,$$

where:

$z$ denotes the sag of the surface parallel to the z-axis,

$r$ denotes the radial distance, i.e. $r = \sqrt{x^2 + y^2}$,,

$c$ denotes the vertex curvature (CUY),

$k$ denotes the conic constant,

$C_j$ denotes the coefficient of the monomial $x^m y^n$, and

$$j = \frac{(m+n)^2 + m + 3n}{2} + 1.$$

The particular coefficients $C_j$ for the embodiment shown in figures 2 and 3 are given in the table of figure 6.

An anamorphic asphere S1 may be described as:

$$z = \frac{(CUX)x^2 + (CUY)y^2}{1 + \sqrt{1 - (1 + KX)(CUX)^2 x^2 - (1 + KY)(CUY)^2 y^2}} +$$
$$A_4\{(1 - AP)x^2 + (1 + AP)y^2\}^2 + A_6\{(1 - BP)x^2 + (1 + BP)y^2\}^3 +$$
$$A_8\{(1 - CP)x^2 + (1 + CP)y^2\}^4 + A_{10}\{(1 - DP)x^2 + (1 + DP)y^2\}^5$$

where:

$z$ denotes the sag of the surface parallel to the z-axis,

$CUX$ and $CUY$ denotes the curvatures in $x$ and $y$ respectively,

$KX$ and $KY$ denote the conic coefficients in $x$ and $y$ respectively and correspond to eccentricity in the same way as $K$ for the ASP surface type,

$A_4, A_6, A_8, A_{10}$ denote the rotationally symmetric portion of the $4^{th}$, $6^{th}$, $8^{th}$, and $10^{th}$ order aspheric deformation from the conic, and

$AP, BP, CP, DP$ denote the non-rotationally symmetric components of the $4^{th}$, $6^{th}$, $8^{th}$, and $10^{th}$ order deformation from the conic. In the embodiment shown in figure 2 and 3 these non-rotationally symmetric components are all zero.

The form of the asphere front and rear surfaces of lens L1 may be described as follows:

$$z = \frac{c \cdot r^2}{1+\sqrt{1-(1+k)c^2 \cdot r^2}} + A_4 r^4 + A_6 r^6 + A_8 r^8 + A_{10} r^{10} + A_{12} r^{12} + A_{14} r^{14} + A_{16} r^{16} + A_{18} r^{18} + A_{20} r^{20},$$

where:

$z$ denotes the sag of the surface parallel to the z-axis,

$r$ denotes the radial distance, i.e. $r = \sqrt{x^2 + y^2}$ ,

$c$ denotes the curvature at the pole of the surface,
$k$ denotes the conic constant, and
$A_4$ to $A_{20}$ denote the 4th, 6th, 8th, 10th, 12th, 14th, 16th, 18th and 20th order asphere deformations coefficients, respectively.

All surface coefficients which are not mentioned in figures 5 and 6 are zero.

The person skilled in the art will understand that the "blocks" ("units") of the various figures (method and apparatus) represent or describe functionalities of embodiments (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments may be integrated into one processing unit, or each of the units may exist alone physically, or two or more units are integrated into one unit.

**Claims**

1. An imaging apparatus (200) for generating an optical image at an image surface, the imaging apparatus (200) comprising a catadioptric device and a lens assembly (L1, L2) arranged behind the catadioptric device in relation to an optical path of the imaging apparatus,

   the catadioptric device including a monolithic piece of material (210), the piece of material (210) having a planar first face (S0), and a non-planar second face,
   the first face (S0) providing a refractive entrance surface (Z0) configured to transmit light toward a reflective inner surface (S1) of the second face, the reflective inner surface (S1) provided by the non-planar second face of the piece of material (210);
   the reflective inner surface (S1) of the second face being configured to reflect light received from the refractive entrance surface (Z0) of the first face (S0) toward a planar reflective inner surface (Z1) of the first face (S0), the refractive entrance surface (Z0) and the reflective inner surface (Z1) of the first face (S0) overlapping partially,
   the reflective inner surface (Z1) of the first face (S0) being configured to reflect light received from the reflective inner surface (S1) of the second face toward a further reflective surface (S2) of the catadioptric device by total internal reflection, the further reflective surface (S2) being an x-y polynomial reflective surface configured to reflect light received from the reflective inner surface (Z1) to a further planar reflective inner surface (Z2) of the first face (S0);
   the further planar reflective inner surface (Z2) of the first face (S0) configured to reflect light from the further reflective surface (S2) towards another x-y polynomial reflective surface (S3); and
   the another x-y polynomial reflective surface (S3) configured to reflect light from the further planar reflective inner surface (Z2) toward a further refractive surface (S4) of the catadioptric device for transmitting the light received from the another x-y polynomial reflective surface (S3) toward the lens assembly (L1, L2).

2. The imaging apparatus (200) of claim 1, wherein the plurality of further reflective surfaces (S2, Z2, S3) of the catadioptric device are provided by the piece of material (210).

3. The imaging apparatus (200) of claim 1, wherein the catadioptric device further comprises one or more mirrors, wherein the one or more mirrors are configured to provide one or more of the further reflective surfaces (S2, Z2, S3) of the catadioptric device.

4. The imaging apparatus (200) of any one of the preceding claims, wherein the lens assembly (L1, L2) is configured to focus light received from the catadioptric device at the image surface, wherein at least one lens (L1, L2) of the lens assembly is movable along an optical axis of the lens assembly, for adjusting a focus of the imaging apparatus, wherein at least one lens (L1, L2) of the lens assembly has a spherical shape or an aspherical shape or a freeform shape.

5. The imaging apparatus (200) of any one of the preceding claims, wherein the reflective inner surface (S1) of the second face is curved or is a freeform surface.

6. The imaging apparatus (200) of claim 5, wherein:

the reflective inner surface (S1) of the second face is an off-axis segment of a conic surface with a conic constant between 0.3 and 1.0 and a surface vertex position that is closer to the image surface than the refractive entrance surface (Z0) of the first face (S0); or
the reflective inner surface (S1) of the second face is an off-axis segment of an aspheric surface or an off axis segment of an x,y-polynomial freeform surface.

7. The imaging apparatus (200) of any one of the preceding claims, wherein a maximum distance d between the refractive entrance surface (Z0) of the first face (S0) and the reflective inner surface (S1) of the second face is smaller than a fifth of an effective focal length, EFL, of the imaging apparatus (200).

8. The imaging apparatus (200) of any one of the preceding claims, wherein a full field-of-view of the imaging apparatus (200) is smaller than 21°.

9. The imaging apparatus (200) of any one of the preceding claims, wherein the imaging apparatus (200) further comprises a near-infrared cut-off filter and/or a cover glass, the near-infrared cut-off filter and/or the cover glass being placed between the lens assembly (L1, L2) and the image surface.

10. The imaging apparatus (200) of any one of the preceding claims, wherein a stop of the imaging apparatus (200) is located in front of the refractive entrance surface (Z0) of the first face (S0).

11. The imaging apparatus (200) of any one of the preceding claims, wherein the piece of material (210) has one or more further faces, the one or more further faces comprising an absorbing material or baffles for suppressing straylight.

12. The imaging apparatus (200) of any one of the preceding claims, wherein at least one of the reflective inner surface (S1) of the second face, the reflective inner surface (Z1) of the first face (S0), and the further reflective surface (S2) comprises a reflective coating layer.

13. The imaging apparatus (200) of any one of the preceding claims, wherein at least one of the reflective inner surface (S1) of the second face, the reflective inner surface (Z1) of the first face (S0), and the further reflective surface (S2) comprises an additional polymer layer with a different refractive index and/or Abbe number for colour correction.

14. A portable device comprising the imaging apparatus (200) according to any one of the preceding claims, wherein the portable device is a mobile phone or a tablet computer.

**Patentansprüche**

1. Abbildungsvorrichtung (200) zum Generieren eines optischen Bildes auf einer Bildfläche, wobei die Abbildungsvorrichtung (200) eine katadioptrische Einrichtung und eine Linsenbaugruppe (L1, L2), die in Bezug auf einen optischen Strahlengang der Abbildungsvorrichtung hinter der katadioptrischen Einrichtung angeordnet ist, umfasst,

wobei die katadioptrische Einrichtung ein monolithisches Materialstück (210) beinhaltet, das Materialstück (210) eine planare erste Seite (S0) und eine nicht planare zweite Seite aufweist,

die erste Seite (S0) eine brechende Eintrittsfläche (Z0) bereitstellt, die dazu konfiguriert ist, Licht in Richtung einer reflektierenden Innenfläche (S1) der zweiten Seite zu übertragen, wobei die reflektierende Innenfläche (S1) durch die nicht planare zweite Seite des Materialstücks (210) bereitgestellt ist;

die reflektierende Innenfläche (S1) der zweiten Seite dazu konfiguriert ist, Licht, das von der brechenden Eintrittsfläche (Z0) der ersten Seite (S0) empfangen wird, in Richtung einer planaren reflektierenden Innenfläche (Z1) der ersten Seite (S0) zu reflektieren,

die brechende Eintrittsfläche (Z0) und die reflektierende Innenfläche (Z1) der ersten Seite (S0) sich teilweise überlappen,

die reflektierende Innenfläche (Z1) der ersten Seite (S0) dazu konfiguriert ist, von der reflektierenden Innenfläche (S1) der zweiten Seite empfangenes Licht durch Totalreflexion in Richtung einer weiteren reflektierenden Fläche (S2) der katadioptrischen Einrichtung zu reflektieren, wobei die weitere reflektierende Fläche (S2) eine x-y-polynomiale reflektierende Fläche ist, die dazu konfiguriert ist, von der reflektierenden Innenfläche (Z1) empfangenes Licht auf eine weitere planare reflektierende Innenfläche (Z2) der ersten Seite (S0) zu reflektieren;

die weitere planare reflektierende Innenfläche (Z2) der ersten Seite (S0) dazu konfiguriert ist, Licht von der weiteren reflektierenden Fläche (S2) in Richtung einer anderen x-y-polynomialen reflektierenden Fläche (S3) zu reflektieren; und

die andere x-y-polynomiale reflektierende Fläche (S3) dazu konfiguriert ist, Licht von der weiteren planaren reflektierenden Innenfläche (Z2) in Richtung einer weiteren brechenden Fläche (S4) der katadioptrischen Einrichtung zu reflektieren, um das von der anderen x-y-polynomialen reflektierenden Fläche (S3) empfangene Licht in Richtung der Linsenbaugruppe (L1, L2) zu übertragen.

2. Abbildungsvorrichtung (200) nach Anspruch 1, wobei die Vielzahl von weiteren reflektierenden Flächen (S2, Z2, S3) der katadioptrischen Einrichtung durch das Materialstück (210) bereitgestellt ist.

3. Abbildungsvorrichtung (200) nach Anspruch 1, wobei die katadioptrische Einrichtung ferner einen oder mehrere Spiegel umfasst, wobei der eine oder die mehreren Spiegel dazu konfiguriert sind, eine oder mehrere der weiteren reflektierenden Flächen (S2, Z2, S3) der katadioptrischen Einrichtung bereitzustellen.

4. Abbildungsvorrichtung (200) nach einem der vorhergehenden Ansprüche, wobei die Linsenbaugruppe (L1, L2) dazu konfiguriert ist, das von der katadioptrischen Einrichtung empfangene Licht auf die Bildfläche zu fokussieren, wobei mindestens eine Linse (L1, L2) der Linsenbaugruppe entlang einer optischen Achse der Linsenbaugruppe bewegbar ist, um einen Fokus der Abbildungsvorrichtung einzustellen, wobei mindestens eine Linse (L1, L2) der Linsenbaugruppe eine sphärische Form oder eine asphärische Form oder eine Freiform aufweist.

5. Abbildungsvorrichtung (200) nach einem der vorhergehenden Ansprüche, wobei die reflektierende Innenfläche (S1) der zweiten Seite gekrümmt oder eine Freiformfläche ist.

6. Abbildungsvorrichtung (200) nach Anspruch 5, wobei:

die reflektierende Innenfläche (S1) der zweiten Seite ein außeraxiales Segment einer konischen Fläche mit einer konischen Konstante zwischen 0,3 und 1,0 und einer Flächenscheitelpunktposition, die näher an der Bildfläche liegt als die brechende Eintrittsfläche (Z0) der ersten Seite (S0), ist; oder

die reflektierende Innenfläche (S1) der zweiten Seite ein außeraxiales Segment einer asphärischen Fläche oder ein außeraxiales Segment einer x,y-polynomialen Freiformfläche ist.

7. Abbildungsvorrichtung (200) nach einem der vorhergehenden Ansprüche, wobei ein maximaler Abstand d zwischen der brechenden Eintrittsfläche (Z0) der ersten Seite (S0) und der reflektierenden Innenfläche (S1) der zweiten Seite kleiner als ein Fünftel einer effektiven Brennweite, EFL, der Abbildungsvorrichtung (200) ist.

8. Abbildungsvorrichtung (200) nach einem der vorhergehenden Ansprüche, wobei ein Gesamtsichtfeld der Abbildungsvorrichtung (200) kleiner als 21° ist.

9. Abbildungsvorrichtung (200) nach einem der vorhergehenden Ansprüche, wobei die Abbildungsvorrichtung (200) ferner einen Nahinfrarot-Sperrfilter und/oder ein Deckglas umfasst, wobei der Nahinfrarot-Sperrfilter und/oder das Deckglas zwischen der Linsenbaugruppe (L1, L2) und der Bildfläche angeordnet ist/sind.

10. Abbildungsvorrichtung (200) nach einem der vorhergehenden Ansprüche, wobei sich ein Anschlag der Abbildungsvorrichtung (200) vor der brechenden Eintrittsfläche (Z0) der ersten Seite (S0) befindet.

11. Abbildungsvorrichtung (200) nach einem der vorhergehenden Ansprüche, wobei das Materialstück (210) eine oder mehrere weitere Seiten aufweist, wobei die eine oder die mehreren weiteren Seiten ein absorbierendes Material oder Blenden zum Unterdrücken von Streulicht umfassen.

12. Abbildungsvorrichtung (200) nach einem der vorhergehenden Ansprüche, wobei mindestens eine der reflektierenden Innenfläche (S1) der zweiten Seite, der reflektierenden Innenfläche (Z1) der ersten Seite (S0) und der weiteren reflektierenden Fläche (S2) eine reflektierende Beschichtungsschicht umfasst.

13. Abbildungsvorrichtung (200) nach einem der vorhergehenden Ansprüche, wobei mindestens eine der reflektierenden Innenfläche (S1) der zweiten Seite, der reflektierenden Innenfläche (Z1) der ersten Seite (S0) und der weiteren reflektierenden Fläche (S2) eine zusätzliche Polymerschicht mit einem anderen Brechungsindex und/oder einer anderen Abbe-Zahl zur Farbkorrektur umfasst.

14. Tragbare Einrichtung, umfassend die Abbildungsvorrichtung (200) nach einem der vorhergehenden Ansprüche, wobei die tragbare Einrichtung ein Mobiltelefon oder ein Tablet-Computer ist.


**Revendications**

1. Appareil d'imagerie (200) pour générer une image optique au niveau d'une surface d'image, l'appareil d'imagerie (200) comprenant un dispositif catadioptrique et un ensemble de lentilles (L1, L2) agencé derrière le dispositif catadioptrique par rapport à un chemin optique de l'appareil d'imagerie,

le dispositif catadioptrique comportant une pièce monolithique de matériau (210), la pièce de matériau (210) ayant une première face plane (S0) et une seconde face non plane,
la première face (S0) fournissant une surface d'entrée réfractive (20) configurée pour transmettre la lumière vers une surface interne réfléchissante (S1) de la seconde face, la surface interne réfléchissante (S1) étant fournie par la seconde face non plane de la pièce de matériau (210) ;
la surface interne réfléchissante (S1) de la seconde face étant configurée pour réfléchir la lumière reçue de la surface d'entrée réfractive (20) de la première face (S0) vers une surface interne réfléchissante plane (Z1) de la première face (S0),
la surface d'entrée réfractive (20) et la surface interne réfléchissante (Z1) de la première face (S0) se chevauchant partiellement,
la surface interne réfléchissante (Z1) de la première face (S0) étant configurée pour réfléchir la lumière reçue de la surface interne réfléchissante (S1) de la seconde face vers une surface réfléchissante supplémentaire (S2) du dispositif catadioptrique par réflexion interne totale, la surface réfléchissante supplémentaire (S2) étant une surface réfléchissante polynomiale x-y configurée pour réfléchir la lumière reçue de la surface interne réfléchissante (Z1) vers une surface interne réfléchissante plane supplémentaire (Z2) de la première face (S0) ;
la surface interne réfléchissante plane supplémentaire (Z2) de la première face (S0) étant configurée pour réfléchir la lumière de la surface réfléchissante supplémentaire (S2) vers une autre surface réfléchissante polynomiale x-y (S3) ; et
l'autre surface réfléchissante polynomiale x-y (S3) étant configurée pour réfléchir la lumière de la surface interne réfléchissante plane supplémentaire (Z2) vers une surface réfractive supplémentaire (S4) du dispositif catadioptrique pour transmettre la lumière reçue de l'autre surface réfléchissante polynomiale x-y (S3) vers l'ensemble de lentilles (L1, L2).

2. Appareil d'imagerie (200) selon la revendication 1, dans lequel la pluralité de surfaces réfléchissantes supplémentaires (S2, Z2, S3) du dispositif catadioptrique sont fournies par la pièce de matériau (210).

3. Appareil d'imagerie (200) selon la revendication 1, dans lequel le dispositif catadioptrique comprend en outre un ou plusieurs miroirs, dans lequel les un ou plusieurs miroirs sont configurés pour fournir une ou plusieurs des surfaces réfléchissantes supplémentaires (S2, Z2, S3) du dispositif catadioptrique.

**4.** Appareil d'imagerie (200) selon l'une quelconque des revendications précédentes, dans lequel l'ensemble de lentilles (L1, L2) est configuré pour focaliser la lumière reçue du dispositif catadioptrique au niveau de la surface d'image, dans lequel au moins une lentille (L1, L2) de l'ensemble de lentilles est mobile le long d'un axe optique de l'ensemble de lentilles, pour régler la mise au point de l'appareil d'imagerie, dans lequel au moins une lentille (L1, L2) de l'ensemble de lentilles a une forme sphérique, une forme asphérique ou une forme libre.

**5.** Appareil d'imagerie (200) selon l'une quelconque des revendications précédentes, dans lequel la surface interne réfléchissante (S1) de la seconde face est incurvée ou est une surface de forme libre.

**6.** Appareil d'imagerie (200) selon la revendication 5, dans lequel :

la surface interne réfléchissante (S1) de la seconde face est un segment hors axe d'une surface conique ayant une constante conique comprise entre 0,3 et 1,0 et une position de sommet de surface qui est plus proche de la surface d'image que la surface d'entrée réfractive (20) de la première face (S0) ; ou
la surface interne réfléchissante (S1) de la seconde face est un segment hors axe d'une surface asphérique ou un segment hors axe d'une surface de forme libre polynomiale x,y.

**7.** Appareil d'imagerie (200) selon l'une quelconque des revendications précédentes, dans lequel une distance maximale d entre la surface d'entrée réfractive (20) de la première face (S0) et la surface interne réfléchissante (S1) de la seconde face est inférieure à un cinquième d'une distance focale effective, EFL, de l'appareil d'imagerie (200).

**8.** Appareil d'imagerie (200) selon l'une quelconque des revendications précédentes, dans lequel le champ de vision complet de l'appareil d'imagerie (200) est inférieur à 21°.

**9.** Appareil d'imagerie (200) selon l'une quelconque des revendications précédentes, dans lequel l'appareil d'imagerie (200) comprend en outre un filtre coupe-infrarouge proche et/ou un verre de protection, le filtre coupe-infrarouge proche et/ou le verre de protection étant placés entre l'ensemble de lentilles (L1, L2) et la surface d'image.

**10.** Appareil d'imagerie (200) selon l'une quelconque des revendications précédentes, dans lequel une butée de l'appareil d'imagerie (200) est située devant la surface d'entrée réfractive (20) de la première face (S0).

**11.** Appareil d'imagerie (200) selon l'une quelconque des revendications précédentes, dans lequel la pièce de matériau (210) a une ou plusieurs faces supplémentaires, les une ou plusieurs faces supplémentaires comprenant un matériau absorbant ou des déflecteurs pour supprimer la lumière parasite.

**12.** Appareil d'imagerie (200) selon l'une quelconque des revendications précédentes, dans lequel au moins une de la surface interne réfléchissante (S1) de la seconde face, de la surface interne réfléchissante (Z1) de la première face (S0) et de la surface réfléchissante supplémentaire (S2) comprend une couche de revêtement réfléchissante.

**13.** Appareil d'imagerie (200) selon l'une quelconque des revendications précédentes, dans lequel au moins une de la surface interne réfléchissante (S1) de la seconde face, de la surface interne réfléchissante (Z1) de la première face (S0) et de la surface réfléchissante supplémentaire (S2) comprend une couche polymère additionnelle avec un indice de réfraction et/ou un nombre d'Abbe différents pour la correction des couleurs.

**14.** Dispositif portable comprenant l'appareil d'imagerie (200) selon l'une quelconque des revendications précédentes, dans lequel le dispositif portable est un téléphone mobile ou une tablette.

Smartphone thickness d

d < f

Folding Prism

Fig. 1

Fig. 2

Fig. 3

EFL = 48 mm, FOV = 5.2 deg, f-number = 4.0

| Element | Surf-Type | Radius Y | Radius X | Refract Mode | Refractive Index | Abbe # | Conic constant y | Conic constant x | Global Coordinate Position w.r.t. Stop: | | | | | |
|---|---|---|---|---|---|---|---|---|---|---|---|---|---|---|
| | | | | | | | | | X | Y | Z | Alpha | Beta | Gamma |
| Object | Sphere | Plano | Plano | Refract | | | | | 0.0000 | 0.0000 | - Infinity | 0.0000 | 0.0000 | 0.0000 |
| Stop | Sphere | Plano | Plano | Refract | | | | | 0.0000 | 0.0000 | 0.0000 | 0.0000 | 0.0000 | 0.0000 |
| Z0 | Sphere | Plano | Plano | Refract | 1.585 | 29.912 | | | 0.0000 | 0.0000 | 0.0000 | 0.0000 | 0.0000 | 0.0000 |
| S1 | Anamorphic Asphere | -49.9141 | -49.0388 | Reflect | 1.585 | 29.912 | -1.04072 | -0.99386 | 0.0000 | -21.5635 | 9.4812 | 0.0000 | 0.0000 | 0.0000 |
| Z1 | Sphere | Plano | Plano | Reflect | 1.585 | 29.912 | | | 0.0000 | 0.0000 | 0.0000 | 0.0000 | 0.0000 | 0.0000 |
| S2 | XY Polynomial | 96.2919 | 96.2919 | Reflect | 1.585 | 29.912 | 0.00000 | 0.00000 | 0.0000 | -12.5000 | 7.0000 | -6.8237 | 0.0000 | 0.0000 |
| Z2 | Sphere | Plano | Plano | Reflect | 1.585 | 29.912 | | | 0.0000 | -17.0328 | 0.0000 | 0.0000 | 0.0000 | 0.0000 |
| S3 | XY Polynomial | 15.1522 | 15.1522 | Reflect | 1.585 | 29.912 | -1.05280 | -1.05280 | 0.0000 | -21.5656 | 7.0000 | 12.0643 | 0.0000 | 0.0000 |
| S4 | XY Polynomial | 17.8019 | 17.8019 | Refract | | | 0.00000 | 0.00000 | 0.0000 | -23.7346 | 5.5943 | 56.9855 | 0.0000 | 0.0000 |
| Dummy | Sphere | Plano | Plano | Refract | | | 0.00000 | 0.00000 | 0.0000 | -23.7346 | 5.5943 | 57.0931 | 0.0000 | 0.0000 |
| L1S1 | Asphere | 22.8416 | 22.8416 | Refract | 1.585 | 29.912 | 0.00000 | 0.00000 | 0.0000 | -24.0680 | 5.3785 | 57.0931 | 0.0000 | 0.0000 |
| L1S2 | Asphere | -3.6995 | -3.6995 | Refract | | | 0.12366 | 0.12366 | 0.0000 | -24.3199 | 5.2155 | 57.0931 | 0.0000 | 0.0000 |
| L2S1 | XY Polynomial | -2.9109 | -2.9109 | Refract | 1.543 | 58.542 | -1.02447 | -1.02447 | 0.0000 | -25.6656 | 4.3448 | 57.0931 | 0.0000 | 0.0000 |
| L2S2 | XY Polynomial | -4.5955 | -4.5955 | Refract | | | -1.87623 | -1.87623 | 0.0000 | -26.6730 | 3.6928 | 57.0931 | 0.0000 | 0.0000 |
| Sensor | Sphere | Plano | Plano | Refract | | | | | 0.0000 | -30.5350 | 1.1938 | 55.8448 | 0.0000 | 0.0000 |

Fig. 4

**Asphere Coefficients**

| Surface / Coefficent | S1 | L1S1 | L1S2 |
|---|---|---|---|
| A4 | 0.0000 | 7.4168E-04 | 1.2366E-01 |
| A6 | 0.0000 | 6.8303E-04 | 7.4168E-04 |
| A8 | 0.0000 | 0.0000 | 6.8303E-04 |
| A10 | 0.0000 | 0.0000 | 0.0000 |

Fig. 5

| Surface / Coefficent | S2 | S3 | S4 | L2S1 | L2S2 |
|---|---|---|---|---|---|
| | | | XY Polynomial Coefficients | | |
| C4 | 1.1277E-02 | -3.8181E-02 | -3.6060E-03 | 7.7112E-02 | 1.3020E-01 |
| C5 | 0.0000E+00 | 0.0000E+00 | 0.0000E+00 | 0.0000E+00 | 0.0000E+00 |
| C6 | 3.3472E-03 | -3.5091E-02 | -6.0926E-03 | 8.4423E-02 | 1.3666E-01 |
| C7 | 0.0000E+00 | 0.0000E+00 | 0.0000E+00 | 0.0000E+00 | 0.0000E+00 |
| C8 | -6.1229E-04 | 2.3441E-04 | -4.7633E-04 | 5.6361E-04 | 4.9570E-04 |
| C9 | 0.0000E+00 | 0.0000E+00 | 0.0000E+00 | 0.0000E+00 | 0.0000E+00 |
| C10 | -3.3021E-04 | 9.0663E-05 | -7.8814E-04 | -8.5089E-04 | -9.3371E-04 |
| C11 | -5.6634E-06 | 1.3582E-06 | 4.5981E-05 | 1.8281E-04 | 4.9722E-04 |
| C12 | 0.0000E+00 | 0.0000E+00 | 0.0000E+00 | 0.0000E+00 | 0.0000E+00 |
| C13 | 1.5706E-05 | -5.1852E-05 | -8.7265E-04 | -7.3369E-04 | 2.9403E-04 |
| C14 | 0.0000E+00 | 0.0000E+00 | 0.0000E+00 | 0.0000E+00 | 0.0000E+00 |
| C15 | 1.0638E-05 | -1.0706E-06 | -4.2566E-05 | 2.6468E-06 | 4.5998E-04 |
| C16 | 0.0000E+00 | 0.0000E+00 | 0.0000E+00 | 0.0000E+00 | 0.0000E+00 |
| C17 | 8.4894E-07 | 5.8987E-06 | 2.8332E-05 | -2.7264E-05 | -1.6132E-05 |
| C18 | 0.0000E+00 | 0.0000E+00 | 0.0000E+00 | 0.0000E+00 | 0.0000E+00 |
| C19 | 3.5639E-07 | 7.5921E-06 | 9.5422E-05 | -4.8166E-06 | -4.6567E-06 |
| C20 | 0.0000E+00 | 0.0000E+00 | 0.0000E+00 | 0.0000E+00 | 0.0000E+00 |
| C21 | -1.7284E-07 | -3.8700E-06 | -7.7677E-05 | 2.6352E-05 | 1.8561E-05 |
| C22 | -1.3713E-07 | -1.0084E-06 | -2.5855E-05 | -1.2736E-06 | -8.9447E-08 |
| C23 | 0.0000E+00 | 0.0000E+00 | 0.0000E+00 | 0.0000E+00 | 0.0000E+00 |
| C24 | -1.3951E-07 | -2.2745E-06 | -1.1162E-05 | 1.9788E-04 | 1.3633E-04 |
| C25 | 0.0000E+00 | 0.0000E+00 | 0.0000E+00 | 0.0000E+00 | 0.0000E+00 |
| C26 | -1.4111E-07 | 2.1252E-07 | 5.0379E-05 | 2.0836E-04 | 1.3425E-04 |
| C27 | 0.0000E+00 | 0.0000E+00 | 0.0000E+00 | 0.0000E+00 | 0.0000E+00 |
| C28 | -1.6872E-08 | 6.1969E-07 | 1.0414E-05 | -5.8517E-05 | -7.6768E-05 |

Fig. 6

Fig. 7

Fig. 8

**Distortion Grid - Infinity**

--- Actual FOV
— Paraxial FOV

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2005333617 A